(19) Europäisches Patentamt
European Patent Office
Office européen des brevets

(11) Veröffentlichungsnummer: **0 272 484 B1**

# (12) EUROPÄISCHE PATENTSCHRIFT

(45) Veröffentlichungstag der Patentschrift: **04.03.92**

(51) Int. Cl.⁵: **C07F 9/40**, C08K 5/53, C09K 21/12

(21) Anmeldenummer: **87117373.8**

(22) Anmeldetag: **25.11.87**

## (54) Verfahren zur Herstellung von halogenierten Phosphono-phosphorsäureestern und ihre Verwendung.

(30) Priorität: **20.12.86 DE 3643684**

(43) Veröffentlichungstag der Anmeldung: **29.06.88 Patentblatt 88/26**

(45) Bekanntmachung des Hinweises auf die Patenterteilung: **04.03.92 Patentblatt 92/10**

(84) Benannte Vertragsstaaten: **BE DE FR GB IT NL SE**

(56) Entgegenhaltungen:
**DE-A- 949 948**
**FR-A- 2 218 343**
**GB-A- 866 817**
**US-A- 2 934 469**

**HOUBEN-WEYL, Methoden der Organischen Chemie, Band XII/2, Seite 69, herausgegeben von Eugen Müller et al., Georg Thieme Verlag, Stuttgart, DE**

(73) Patentinhaber: **HOECHST AKTIENGESELLSCHAFT**
**Postfach 80 03 20**
**W-6230 Frankfurt am Main 80(DE)**

(72) Erfinder: **Staendeke, Horst, Dr.**
**Alte Honrather Strasse 22**
**W-5204 Lohmar(DE)**
Erfinder: **Krause, Werner, Dr.**
**Henriette-Lott-Weg 8**
**W-5030 Hürth(DE)**

EP 0 272 484 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von halogenierten Phosphono-phosphorsäureestern sowie eine neue Verwendungsart dieser Verbindungen.

Bekanntlich lassen sich Phosphorigsäuretrialkylester mit α-Halogencarbonylverbindungen unter Abspaltung von Alkylhalogenid zu den β-Oxo-alkanphosphonsäuredialkylestern umsetzen (MICHAELIS-ARBUSOW-Umlagerung):

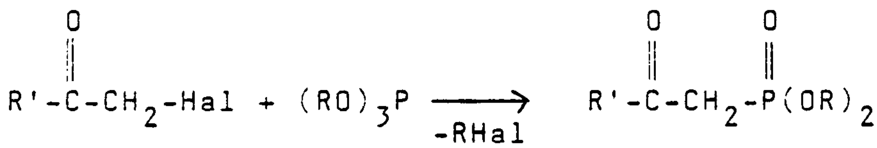


Als Konkurrenzreaktion ist die ebenfalls bekannte Bildung von Phosphorsäuredialkylvinylestern anzusehen (PERKOW-Reaktion):

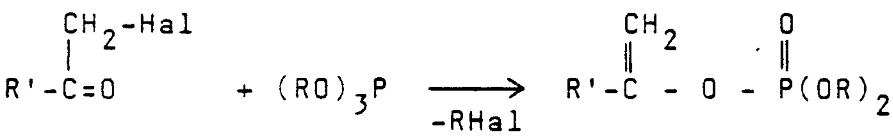


Führt man nun die Umsetzung von Phosphorigsäuretrialkylestern mit α-Halogenacylhalogeniden durch, so gelangt man durch Kombination der MICHAELIS-ARBUSOW-Umlagerung mit der PERKOW-Reaktion zu den Phosphonovinylphosphorsäureestern (siehe K. Sasse in "Methoden der organischen Chemie" (HOUBEN-WEYL), Band XII/2, S. 352).

Aus der US-PS 2 934 469 ist es schließlich schon bekannt, daß Phosphonovinylphosphorsäureester in einfacher Reaktion aus 2 Mol Phosphorigsäuretrialkylester und 1 Mol α-Halogenacylhalogenid herzustellen sind, und daß diese Verbindungen als Pestizide eingesetzt werden können.

Überraschenderweise wurde nun gefunden, daß man beim Verfahren zur Herstellung von halogenierten Phosphono-phosphorsäureestern der allgemeinen Formel

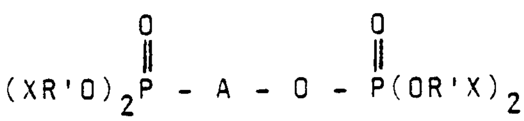

in welcher

X = Halogen,
R′ = Alkylen- mit 1 bis 4 C-Atomen,
A =

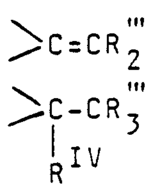

oder

$R'''$ = gleiche oder verschiedene Reste aus Alkyl- mit 1 bis 4 C-Atomen, Halogen oder Wasserstoff und
$R^{IV}$ = Halogen oder Wasserstoff

bedeuten, ausgehend von Phosphor(III)-chlorid - anstelle von Phosphorigsäuretriester als Phosphorkomponente - in einem sogenannten Eintopfverfahren ohne Zwischenschaltung von Aufarbeitungs- und Reinigungsstufen des Triesters arbeiten kann, was erhebliche Vorteile an apparativem Aufwand und Energieeinsparungen mit sich bringt.

Insbesondere fällt dennoch das gewünschte Endprodukt in guter Ausbeute und bei erfindungsgemäßer Nachschaltung geeigneter Waschstufen in genügender Reinheit an, um speziellen Verwendungszwecken zugeführt zu werden.

Das Verfahren der Erfindung besteht nunmehr darin, daß man in einem ersten Verfahrensschritt Phosphor(III)-chlorid in Gegenwart eines Katalysators mit Alkylenoxid umsetzt, dann von überschüssigem Alkylenoxid befreit und das erhaltene Reaktionsprodukt aus im wesentlichen Phosphorigsäuretrialkylester ohne dessen Aufarbeitung in einem zweiten Verfahrensschritt mit dem betreffenden Halogenacylhalogenid im Molverhältnis 2 : 1 - 1,5 umsetzt, und dann entweder den Phosphono-phosphorsäureester nach mehrmaligem Waschen mit Wasser und/oder einer wässerigen Lösung von Ammoniak isoliert oder diesen ohne weitere Aufarbeitung in einem dritten Verfahrensschritt unter UV-Katalyse halogeniert und dann erst den Phosphono-phosphorsäureester nach mehrmaligem Waschen mit Wasser und/oder einer wässerigen Lösung von Ammoniak isoliert.

Im einzelnen können in jeweils vorteilhafter Weise

a) als Alkylenoxid das Ethylenoxid eingesetzt werden;

b) Chlor oder Brom für den Begriff Halogen stehen;

c) als Halogenacylhalogenid das Chloressigsäurechlorid eingesetzt werden, wobei der Phosphorsäure-bis-(2-chlorethyl)-1-[bis-(2-chlorethyl)-phosphono]-vinylester der allgemeinen Formel

$$(ClCH_2CH_2O)_2\overset{\overset{\displaystyle O}{\|}}{P} - \overset{\overset{\displaystyle CH_2}{\|}}{C} - O - \overset{\overset{\displaystyle O}{\|}}{P}(OCH_2CH_2Cl)_2$$

erhalten wird;

d) im zweiten Verfahrensschritt ein Molverhältnis von Phosphorigsäuretrialkylester zu Halogenacylhalogenid von 2 : 1,1 eingehalten werden;

e) beim ersten Verfahrensschritt Temperaturen von -20° C bis +20° C, vorzugsweise 0° bis 10° C, und Reaktionszeiten zwischen 0,5 - 5 Stunden, vorzugsweise 2 - 3 Stunden, eingehalten werden; und schließlich

f) beim zweiten und gegebenenfalls beim dritten Verfahrensschritt Temperaturen von 0° bis 100° C, vorzugsweise < 30° C, und Reaktionszeiten zwischen 0,5 - 5 Stunden, vorzugsweise 1 - 2 Stunden, eingehalten werden.

Die erfindungsgemäßen nachgeschalteten Waschstufen werden insbesondere mit Wasser oder - im Wechsel - auch mit etwa 10 %igen Ammoniumhydroxidlösungen durchgeführt, worauf die erhaltenen halogenierten Phosphono-phosphorsäureester zum Einsatz als Flammschutzmittel bzw. Flammschutzmittelkomponenten geeignet sind.

Ein weiterer Gedanke der vorliegenden Erfindung besteht daher in der Verwendung von halogenierten Phosphono-phosphorsäureestern der allgemeinen Formel

$$(XR'O)_2\overset{\overset{\displaystyle O}{\|}}{P} - A - O - \overset{\overset{\displaystyle O}{\|}}{P}(OR'X)_2$$

in welcher

X = Halogen,
R' = Alkylen- mit 1 bis 4 C-Atomen,
A =

$$>C-CR'''_2 \quad \text{oder}$$

$$>\underset{\underset{\displaystyle R^{IV}}{|}}{C}-CR'''_3$$

$R'''$ = gleiche oder verschiedene Reste aus Alkyl- mit 1 bis 4 C-Atomen, Halogen oder Wasserstoff und

$R^{IV}$ = Halogen oder Wasserstoff

bedeuten, als Flammschutzmittel zur Verminderung der Brennbarkeit von brennbaren Stoffen.

Vorteilhafterweise werden dabei solche halogenierten Phosphonophosphorsäureester als Flammschutzmittel zur Verminderung der Brennbarkeit von brennbaren Stoffen eingesetzt, die nach dem erfindungsgemäßen Verfahren hergestellt wurden. Die genannten Verbindungen eignen sich beispielsweise zur Flammfestausrüstung von Kunststoffen wie ungesättigten Polyestern und Epoxidharzen sowie zur Flammfestausrüstung von Textilien.

Die nachfolgenden Beispiele dienen zur näheren Erläuterung des erfindunsgemäßen Herstellungsverfahrens sowie der Verwendung der halogenierten Phosphono-phosphorsäureester.

Beispiele

1. Herstellung von Phosphorsäure-bis-(2-chlorethyl)-1-[bis-(2-chlorethyl)-phosphono]-vinylester:

In einen Rührreaktor von 5 l-Inhalt mit Rückflußkühler und Thermometer wurden 1900 g (14 Mol) Phosphor(III)-chlorid eingefüllt und mit 10 g Titan(IV)-chlorid versetzt. Dann wurden im Verlauf von 3 Stunden unter Rühren 2000 g (45 Mol) Ethylenoxid eingeleitet, wobei die Reaktionstemperatur durch Kühlung unter 10° C gehalten wurde. Nach einer Nachreaktion von 1 Stunde bei 80° C wurde das überschüssige Ethylenoxid bei vermindertem Druck von ca. 30 mbar entfernt. Anschließend wurden im Verlauf von 1,5 Stunden 870 g (7,7 Mol) Chloressigsäurechlorid eingetropft, wobei durch Kühlung die Reaktionstemperatur unter 30° C gehalten wurde.

Nach einer Nachreaktionszeit von 1,5 Stunden bei 90 - 100° C wurde der Rückflußkühler durch einen absteigenden Kühler ersetzt; das als Reaktionsnebenprodukt entstandene Dichlorethan wurde abdestilliert. Weitere flüchtige Nebenbestandteile wurden dann unter vermindertem Druck von ca.10 mbar entfernt.

Das Reaktionsprodukt wurde anschließend nacheinander mit 6 Liter Wasser, 6 Liter 10 %iger Ammoniumhydroxidlösung und nochmals mit 6 Liter Wasser gewaschen. Unter langsamer Temperatursteigerung wurde dann das Wasser bei einem Druck von ca. 120 mbar abdestilliert; die restlichen flüchtigen Bestandteile wurden bei einer Temperatur von 120° C und einem Druck von 1 mbar entfernt.

Nach dem Abkühlen wurden 2490 g einer farblosen Flüssigkeit mit folgenden analytischen Daten erhalten:

| | |
|---|---|
| Dichte (bei 25° C): | 1,445 g/ml |
| Viskosität (bei 25° C): | 280 mPa•s |
| Brechungsindex (bei 25° C): | 1,4867 |
| Säurezahl: | 1,2 mg KOH/g |
| Phosphorgehalt: | 13,0 % P (theor. 13,6 % P) |
| Chlorgehalt: | 32,1 % Cl (theor. 31,3 % Cl) |

Die $p^{31}$-NMR-spektroskopische Untersuchung ergab, daß 85 % der gewünschten Verbindung vorlagen; der Rest verteilte sich auf eine Reihe strukturverwandter Phosphor-und Phosphonsäureester.

2. Herstellung von Phosphorsäure-bis-(2-chlorethyl)-1-[bis-(2-chlorethyl)-phosphono]-2-chlorvinylester

In einen Rührreaktor von 5 l-Inhalt mit Rückflußkühler und Thermometer wurden 1900 g (14 Mol) Phosphor(III)-chlorid eingefüllt und mit 10 g Titan(IV)-chlorid versetzt. Dann wurden im Verlauf von 3 Stunden unter Rühren 2000 g (45 Mol) Ethylenoxid eingeleitet, wobei die Reaktionstemperatur durch Kühlung unter 10° C gehalten wurde. Nach einer Nachreaktion von 1 Stunde bei 80° C wurde das überschüssige Ethylenoxid bei vermindertem Druck von ca. 30 mbar entfernt. Anschließend wurden im Verlauf von 1,5 Stunden 1140g (7,7 Mol) Dichloressigsäurechlorid eingetropft, wobei durch Kühlung die Reaktionstemperatur unter 30° C gehalten wurde.

Nach einer Nachreaktionszeit von 1,5 Stunden bei 90 -100° C wurde der Rückflußkühler durch einen absteigenden Kühler ersetzt; das als Reaktionsnebenprodukt entstandene Dichlorethan wurde abdestilliert. Weitere flüchtige Nebenbestandteile wurden dann unter vermindertem Druck von ca. 10 mbar entfernt.

Das Reaktionsprodukt wurde anschließend nacheinander mit 6 Liter Wasser, 6 Liter 10 %iger Ammoniumhydroxidlösung und nochmals mit 6 Liter Wasser gewaschen. Unter langsamer Temperatursteigerung wurde dann das Wasser bei einem Druck von ca. 120 mbar abdestilliert; die restlichen flüchtigen Bestandteile wurden bei einer Temperatur von 120° C und einem Druck von 1 mbar entfernt.

Nach dem Abkühlen wurden 2980 g einer farblosen Flüssigkeit mit folgenden analytischen Daten

erhalten:
Dichte (bei 25 °C): 1,490 g/ml
Viskosität (bei 25 °C):380 mPa•s
Säurezahl: 1,5 mg KOH/g
Phosphorgehalt: 12,5 % P (theor. 12,7 % P)
Chlorgehalt: 37,0 % Cl (theor. 36,3 % Cl)

Die $P^{31}$-NMR-spektroskopische Untersuchung ergab, daß 88 % der gewünschten Verbindung vorlagen; der Rest verteilte sich auf eine Reihe strukturverwandter Phosphor-und Phosphonsäureester.

3. Herstellung von Phosphorsäure-bis-(2-chlorethyl)-1-[bis-(2-chlorethyl)-phosphono]-1,2-dichlorethylester

In einen Rührreaktor von 5 l-Inhalt mit Rückflußkühler und Thermometer wurden 1900 g (14 Mol) Phosphor(III)-chlorid eingefüllt und mit 10 g Titan(IV)-chlorid versetzt. Dann wurden im Verlauf von 3 Stunden unter Rühren 2000 g (45 Mol) Ethylenoxid eingeleitet, wobei die Reaktionstemperatur durch Kühlung unter 10 °C gehalten wurde. Nach einer Nachreaktion von 1 Stunde bei 80 °C wurde das überschüssige Ethylenoxid bei vermindertem Druck von ca. 30 mbar entfernt. Anschließend wurden im Verlauf von 1,5 Stunden 870 g (7,7 Mol) Chloressigsäurechlorid eingetropft, wobei durch Kühlung die Reaktionstemperatur unter 30 °C gehalten wurde.

Nach einer Nachreaktionszeit von 1,5 Stunden bei 90 - 100 °C wurde der Rückflußkühler durch einen absteigenden Kühler ersetzt; das als Reaktionsnebenprodukt entstandene Dichlorethan wurde abdestilliert. Weitere flüchtige Nebenbestandteile wurden dann unter vermindertem Druck von ca. 10 mbar entfernt.

Anschließend wurden 2000 ml Tetrachlormethan zugegeben und eine PHILIPS-Quecksilberdampflampe (Typ HPK 125 W) mit wassergekühltem Tauchfinger eingebaut.

Dann wurden im Verlauf von 3 Stunden 550 g Chlor eingeleitet, wobei die Reaktionstemperatur durch Kühlung unter 10 °C gehalten wurde. Nach einer Nachreaktionszeit von 1 Stunde bei 50 °C wurde das überschüssige Chlor zusammen mit dem als Lösungsmittel eingesetzten Tetrachlormethan abdestilliert. Weitere flüchtige Nebenbestandteile wurden dann unter vermindertem Druck von ca. 10 mbar entfernt.

Das Reaktionsprodukt wurde anschließend nacheinander mit 6 Liter Wasser, 6 Liter 10 %iger Ammoniumhydroxidlösung und nochmals mit 6 Liter Wasser gewaschen. Unter langsamer Temperatursteigerung wurde dann das Wasser bei einem Druck von ca. 120 mbar abdestilliert; die restlichen flüchtigen Bestandteile wurden bei einer Temperatur von 120 °C und einem Druck von 1 mbar entfernt.

Nach dem Abkühlen wurden 3350 g einer farblosen Flüssigkeit mit folgenden analytischen Daten erhalten:
Dichte (bei 25 °C): 1,510 g/ml
Viskosität (bei 25 °C): 300 mPa•s
Säurezahl: 1,3 mg KOH/g
Phosphorgehalt: 11,3 % P (theor. 11,1 % P)
Chlorgehalt: 43,7 % Cl (theor. 44,4 % Cl)

Die $P^{31}$-NMR-spektroskopische Untersuchung ergab, daß 81 % der gewünschten Verbindung vorlagen; der Rest verteilte sich auf eine Reihe strukturverwandter Phosphor-und Phosphonsäureester.

4. Verwendung von Phosphorsäure-bis-(2-chlorethyl)-1-[bis-(2-chlorethyl)-phosphono]-vinylester als Flammschutzmittel für Polyurethanschäume:

In einen 2-Liter-Pappbecher wurden
1000 g ® Caradol 48-2 (SHELL), ein Polyetherpolyol
100 g Flammschutzmittel aus Beispiel 1
40 g Wasser
4 g Dimethylethanolamin
2 g ® Dabco 33 LV (HOUDRY-HÜLS), ein Katalysator auf Basis tertiärer Amine
2 g ® Desmorapid SO (BAYER), ein Katalysator auf Basis von Organozinnverbindungen
10 g ® Tegostab B 3640 (GOLDSCHMIDT), ein Schaumstabilisator auf Basis von Silicoverbindungen
eingewogen und mit einem Intensivmischer 1 min gerührt. Unter weiterem Rühren (mit stark reduzierter Drehzahl) wurden dann 513 g ® Desmodur T 80 (BAYER), ein Diisocyanato-toluol zugegeben; anschließend wurde 10 sec intensiv gemischt. Dann wurde die Mischung sofort in eine Holzform (40 × 40 × 50 cm) mit eingestellter Papiertüte gegossen. Die Steigzeit des Schaums betrug 142 sec.

Nach 5 min wurde der Schaumblock zur weiteren Aushärtung für 15 min in einen Umluft-Trockenschrank bei einer Temperatur von 140 °C eingestellt.

Die weitere Ausprüfung des Schaums erfolgte nach einer Lagerzeit von mindestens 24 Stunden bei Raumtemperatur und ergab folgende Daten:
Rohdichte: 27 kg/$m^3$

Bei den Brandtests gemäß FMVSS 302 (Federal Motor Vehicle Safety Standard 302 - USA -) und ASTM-D 2863-74 (Sauerstoff-Index-Test - USA -) wurden folgende Werte erhalten:

| Alterungsbedingungen | FMVSS 302-Klasse | Sauerstoff-Index |
|---|---|---|
| ungealtert | SE<br>Brennstrecke: 21 mm | 0.21 |
| 22 Std. bei<br>140 °C (Umluft) | SE<br>Brennstrecke: 16 mm | 0.22 |
| 72 Std. bei<br>140 °C (Umluft) | SE<br>Brennstrecke: 12 mm | 0.23 |

Sowohl an den Werten des FMVSS 302-Tests als auch an den Zahlen des Sauerstoff-Index-Tests ist abzulesen, daß der Flammschutzeffekt unter den Alterungsbedingungen der trockenen Hitze sogar noch zunimmt.

**Patentansprüche**

**1.** Verfahren zur Herstellung von halogenierten Phosphono-phosphorsäureestern der allgemeinen Formel

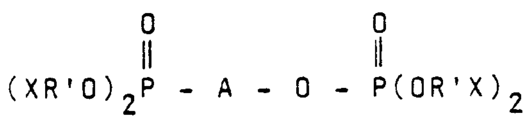

in welcher

X = Halogen,
R′ = Alkylen- mit 1 bis 4 C-Atomen,
A =

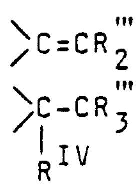

oder

R‴ = gleiche oder verschiedene Reste aus Alkyl- mit 1 bis 4 C-Atomen, Halogen oder Wasserstoff und
$R^{IV}$ = Halogen oder Wasserstoff

bedeuten, dadurch gekennzeichnet, daß man in einem ersten Verfahrensschritt Phosphor(III)-chlorid in Gegenwart eines Katalysators mit Alkylenoxid umsetzt, dann von überschüssigem Alkylenoxid befreit und das erhaltene Reaktionsprodukt aus im wesentlichen Phosphorigsäuretrialkylester ohne dessen Aufarbeitung in einem zweiten Verfahrensschritt mit dem betreffenden Halogenacylhalogenid im Molverhältnis 2 : 1 - 1,5 umsetzt, und dann entweder den Phosphono-phosphorsäureester nach mehrmaligem Waschen mit Wasser und/oder einer wässerigen Lösung von Ammoniak isoliert oder diesen ohne weitere Aufarbeitung in einem dritten Verfahrensschritt unter UV-Katalyse halogeniert und dann erst den Phosphono-phosphorsäureester nach mehrmaligem Waschen mit Wasser und/oder einer wässerigen Lösung von Ammoniak isoliert.

**2.** Verfahren nach Anspruch 1, dadurch gekennzeichnet, daß als Alkylenoxid das Ethylenoxid eingesetzt

wird.

3. Verfahren nach einem der Ansprüche 1 oder 2, dadurch gekennzeichnet, daß als Halogen für Chlor oder Brom steht.

4. Verfahren nach einem der Ansprüche 1 bis 3, dadurch gekennzeichnet, daß als Halogenacylhalogenid das Chloressigsäurechlorid eingesetzt und der Phosphorsäure-bis-(2-chlorethyl)-1-[bis-(2-chlorethyl)-phosphono]-vinylester der Formel

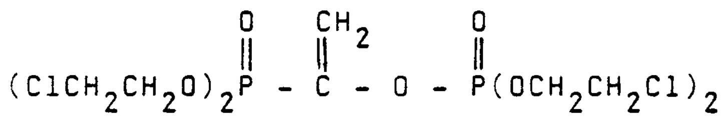

erhalten wird.

5. Verfahren nach einem der vorhergehenden Ansprüche, dadurch gekennzeichnet, daß im zweiten Verfahrensschritt ein Molverhältnis von Phosphorigsäuretrialkylester zu Halogenacylhalogenid von 2 : 1,1 eingehalten wird.

6. Verfahren nach einem der vorhergehenden Ansprüche, dadurch gekennzeichnet, daß beim ersten Verfahrensschritt Temperaturen von -20° bis +20° C, vorzugsweise 0° bis 10° C, und Reaktionszeiten zwischen 0,5 - 5 Stunden, vorzugsweise 2 - 3 Stunden, eingehalten werden.

7. Verfahren nach einem der vorhergehenden Ansprüche, dadurch gekennzeichnet, daß beim zweiten und gegebenenfalls beim dritten Verfahrensschritt Temperaturen von 0° bis 100° C, vorzugsweise < 30° C, und Reaktionszeiten zwischen 0,5 - 5 Stunden, vorzugsweise 1 - 2 Stunden, eingehalten werden.

8. Verwendung von halogenierten Phosphono-phosphorsäureestern der allgemeinen Formel

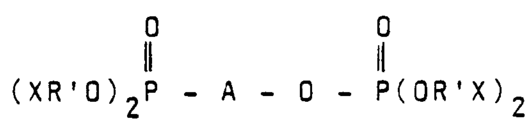

in welcher

X = Halogen,
R′ = Alkylen- mit 1 bis 4 C-Atomen,
A =

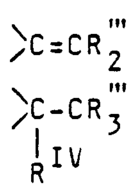 oder

R‴ = gleiche oder verschiedene Reste aus Alkyl- mit 1 bis 4 C-Atomen, Halogen oder Wasserstoff und
$R^{IV}$ = Halogen oder Wasserstoff

bedeuten, als Flammschutzmittel zur Verminderung der Brennbarkeit von brennbaren Stoffen.

9. Verwendung von halogenierten Phosphono-phosphorsäureestern nach Anspruch 8 und hergestellt nach einem Verfahren gemäß einem der Ansprüche 1-7, als Flammschutzmittel zur Verminderung der

Brennbarkeit von brennbaren Stoffen.

## Claims

**1.** A process for the preparation of halogenated phosphonophosphoric acid esters of the formula

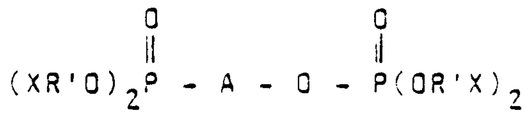

in which

X is halogen,
R' is alkylene- having 1 to 4 carbon atoms,
A is

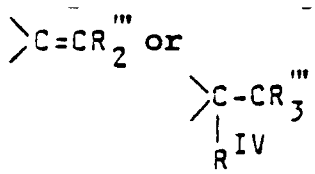
or

R''' is identical or different radicals from alkyl- having 1 to 4 carbon atoms, halogen or hydrogen and
$R^{IV}$ is halogen or hydrogen,

which comprises reacting, in a first process step, phosphorus(III) chloride with alkylene oxide in the presence of a catalyst, then freeing product from excess alkylene oxide and reacting the resultant reaction product of essentially trialkyl phosphite, without working it up, with the haloacyl halide in question in a molar ratio of 2:1-1.5 in a second process step, and then either isolating the phosphonophosphoric acid ester after repeated washing with water and/or an aqueous solution of ammonia or halogenating said ester without further working-up in a third process step using UV catalysis and only then isolating the phosphonophosphoric acid ester after repeated washing with water and/or an aqueous solution of ammonia.

**2.** The process as claimed in claim 1, wherein the alkylene oxide employed is ethylene oxide.

**3.** The process as claimed in either of claims 1 or 2, wherein halogen is chlorine or bromine.

**4.** The process as claimed in one of claims 1 to 3, wherein the haloacyl halide employed is chloroacetyl chloride and bis(2-chloroethyl)-1-[bis(2-chloroethyl)phosphono]vinyl phosphate of the formula

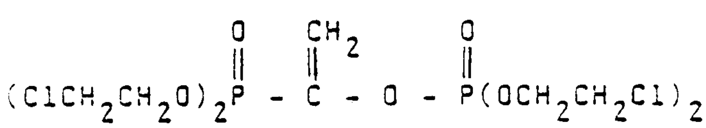

is obtained.

**5.** The process as claimed in one of the preceding claims, wherein in the second process step a molar ratio of trialkyl phosphite to haloacyl halide of 2:1.1 is maintained.

**6.** The process as claimed in one of the preceding claims, wherein in the first process step temperatures of -20° to +20° C, preferably 0° to 10° C, and reaction times between 0.5-5 hours, preferably 2-3 hours, are maintained.

**7.** The process as claimed in one of the preceding claims, wherein in the second and, if desired, in the third process step temperatures from 0° to 100° C, preferably < 30° C, and reaction times between 0.5-5 hours, preferably 1-2 hours, are maintained.

**8.** The use of halogenated phosphonophosphoric acid esters of the formula

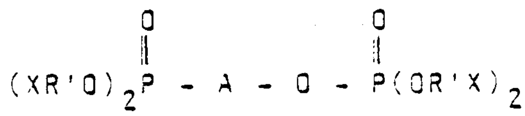

in which

X is halogen,
R' is alkylene- having 1 to 4 carbon atoms,
A is

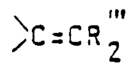
or
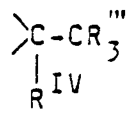

R''' is identical or different radicals from alkyl- having 1 to 4 carbon atoms, halogen or hydrogen and
$R^{IV}$ is halogen or hydrogen,

as flame-retardants for reducing the flammability of flammable substances.

**9.** The use of halogenated phosphonophosphoric acid esters as claimed in claim 8 and prepared by a process as claimed in one of claims 1-7, as flame retardants for reducing the flammability of flammable substances.

## Revendications

**1.** Procédé pour la fabrication d'esters phosphonophoriques halogénés de formule générale

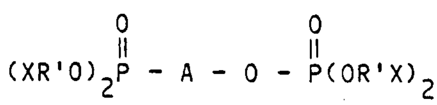

dans laquelle
X = halogène,
R' = alkylène en $C_1$-$C_4$,
A =

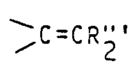
ou
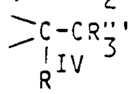

R''' représente des restes identiques ou différents choisis parmi les groupes alkyles en $C_1$-$C_4$, les halogènes et l'hydrogène et
$R^{IV}$ représente un halogène ou l'hydrogène,

caractérisé en ce que l'on fait réagir dans une première étape opératoire le chlorure de phosphore (III) avec un oxyde d'alkylène en présence d'un catalyseur, on élimine ensuite l'oxyde d'alkylène en excès et on fait réagir sans le traiter le produit de réaction obtenu consistant essentiellement en phosphite de trialkyle dans une seconde étape opératoire avec l'halogénure d'halogénoacyle correspondant dans un rapport de 2 : 1 - 1,5 et ensuite ou bien on isole l'ester phosphono-phosphorique après plusieurs lavages par l'eau et/ou par une solution aqueuse d'ammoniaque, ou bien on halogène celui-ci sans autre traitement dans une troisième étape opératoire par catalyse par les UV et ensuite seulement on isole l'ester phosphono-phosphorique après plusieurs lavages par l'eau et/ou par une solution aqueuse d'ammoniaque.

**2.** Procédé selon la revendication 1, caractérisé en ce que l'on utilise comme oxyde d'alkylène l'oxyde d'éthylène.

**3.** Procédé selon l'une des revendications 1 ou 2, caractérisé en ce que l'halogène est le chlore ou le brome.

**4.** Procédé selon l'une des revendications 1 à 3, caractérisé en ce que l'on utilise comme halogénure d'halogénoacyle le chlorure de chloroacétyle et on obtient le phosphate de bis-(2-chloroéthyle) et de 1-[bis-(2-chloroéthyl)phosphono]-vinyle de formule

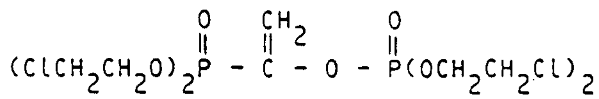

**5.** Procédé selon l'une des revendications précédentes, caractérisé en ce que l'on maintient dans la seconde étape opératoire un rapport molaire du phosphite de trialkyle à l'halogénure d'halogénoacyle de 2 : 1,1.

**6.** Procédé selon l'une des revendications précédentes, caractérisé en ce que l'on maintient pendant la première étape opératoire des températures de -20 à +20 °C, de préférence de 0 à 10 °C et des durées de réaction comprises entre 0,5 et 5 h, de préférence de 2 - 3 h.

**7.** Procédé selon l'une des revendications précédentes, caractérisé en ce que l'on maintient pendant la seconde et éventuellement la troisième étape opératoire des températures de 0 à 100 °C, de préférence <30 °C et des durées de réaction comprises entre 0,5 et 5 h, de préférence 1 - 2 h.

**8.** Utilisation d'esters phosphono-phosphoriques halogénés de formule générale

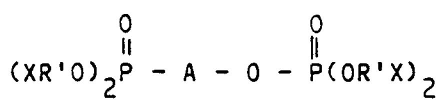

dans laquelle

X = halogène,

R' = alkylène en $C_1$-$C_4$,

A =

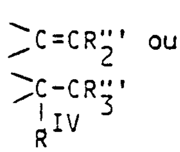

R''' représente des restes identiques ou différents choisis parmi les groupes alkyles en $C_1$-$C_4$,

les halogènes et l'hydrogène et

$R^{IV}$ représente un halogène ou l'hydrogène

comme agents ignifugeants pour réduire la combustibilité des substances combustibles.

**9.** Utilisation d'esters phosphono-phosphoriques halogénés selon la revendication 8 et fabriqués par un procédé selon l'une des revendications 1-7 comme ignifugeants pour réduire la combustibilité de substances combustibles.